**Europäisches Patentamt**

**European Patent Office**

**Office européen des brevets**

(19)

(11) Veröffentlichungsnummer: **0 116 143**
**A1**

(12) **EUROPÄISCHE PATENTANMELDUNG**

(21) Anmeldenummer: **83112254.4**

(22) Anmeldetag: **06.12.83**

(51) Int. Cl.³: **B 26 B 19/28**

(30) Priorität: **08.12.82 DE 3245363**

(43) Veröffentlichungstag der Anmeldung:
**22.08.84 Patentblatt 84/34**

(84) Benannte Vertragsstaaten:
**AT BE CH DE FR GB IT LI LU NL SE**

(71) Anmelder: **Paschek, Günter, Dipl.-Ing.**
**Falkenweg 2**
**D-5210 Troisdorf(DE)**

(72) Erfinder: **Paschek, Günter, Dipl.-Ing.**
**Falkenweg 2**
**D-5210 Troisdorf(DE)**

(54) **Elektrischer Rasierapparat.**

(57) Elektrischer Rasierapparat mit einem Gehäuse, einer mittels eines Motors angetriebenen Schermechanik und mindestens einer Speichertrockenbatterie, die elektrisch mit dem Motor verbunden und mittels Solarzellen wiederaufladbar ist.

Fig. 2

EP 0 116 143 A1

- 1 -

Troisdorf, den 3.12.1982

Dipl.-Ing. G. Paschek

Troisdorf

Rasierapparat

Die Erfindung bezieht sich auf einen Rasierapparat mit einem Gehäuse, einer mittels eines Motors angetriebenen Schermechanik und mindestens einer wiederaufladbaren Speichertrockenbatterie, die elektrisch mit dem Motor verbunden ist.

Es ist bekannt, Rasierapparate mittels Speichertrockenbatterien auszurüsten, um sie unabhängig von einem elektrischen Stromversorgungsnetz einsetzen zu können. Hierbei ist jedoch die Laufdauer des Rasierapparates abhängig von der durch den Betrieb der Speichertrockenbatterie in kurzer Zeit auf Null sinkenden Kapazität der Speichertrockenbatterie.

Der Erfindung liegt die Aufgabe zugrunde, einen wiederaufladbaren Rasierapparat zu schaffen, dessen Speichertrockenbatterie unabhängig von einem vorhandenen elektrischen Stromversorgungsnetz wieder aufgeladen werden kann und eine sehr lange Lebensdauer haben soll, die

- 2 -

0116143

vergleichbar zumindest mit der Lebensdauer der mechanischen Teile des Rasierapparates sein soll.

Erfindungsgemäß wird die Aufgabe mit einem Rasierapparat gelöst, bei dem in Serie geschaltete und zu einer Platte verbundene Solarzellen an einer Gehäusefläche außenseitig bzw. innenseitig befestigt und mittels einer lichtdurchlässigen Kunststoffplatte abgedeckt sind. Die erfindungsgemäß vorgesehenen Solarzellen, die mit der Speichertrokkenbatterie elektrisch verbunden sind, ermöglichen nun durch Aussetzen der Sonneneinstrahlung die einfache Wiederaufladung der Speichertrockenbatterie, wobei dieser Vorgang bereits bei bedecktem Himmel oder künstlichem Licht einsetzt, so daß eine sehr lange Lebensdauer gewährleistet ist. Bei einer vorteilhaften Ausführung der Erfindung ist die lichtdurchlässige Kunststoffplatte als integrierter Bestandteil des Gehäuses ausgebildet.

Bevorzugt werden plattenförmige Solarzellen eingesetzt, die beispielsweise an der Gehäusefläche festgeklebt sind. Der Rasierapparat behält auf diese Weise seine kompakte und leicht handhabbare Gestalt. Die Solarzellen können auf zu einem plattenförmigen sogenannten Solargenerator zusammengefaßt sein und längs eines Randes mit dem Gehäuse durch Überlappen außen- oder innenseitig verbunden sein.

Eine weitere vorteilhafte Ausbildung der Erfindung sieht vor, daß die Solarzellen auf einer nischenförmig eingezogenen Gehäuseaußenfläche befestigt sind.

In einer weiteren Ausbildung der Erfindung ist vorgesehen, daß eine beidseitig je längs eines Randes in dem Gehäuse in einer Hinterschneidung geführte und nach einer Seite ausschiebbare lichtundurchlässige Schutzkappe über den Solarzellen mit Kunststoffplatte vorgesehen ist.

- 3 -

Auf diese Weise werden die Solarzellen bei der Handhabung des Rasierapparates vor einer Beschädigung sicher geschützt, andererseits kann durch das Abnehmen der Schutzkappe die Wiederaufladung durch die Solarzellen eingeleitet werden. Es ist auch möglich, eine lichtundurchlässige Schutzkappe auf das Gehäuse zum Abdecken der Solarzellen aufzuklipsen.

Geeignete Motoren zum Einsatz in den erfindungsgemäß ausgebildeten Rasierapparat können zwischen 1 bis 20 W, 1,2 bis 24 V aufweisen und mit Speichertrockenbatterien von 0,05 bis 4 Ah ausgerüstet sein. Die Anzahl der benötigten Speichertrockenbatterien und Solarzellen richtet sich nach der gewünschten Leistungsentnahme.

Eine vorteilhafte Ausrüstung des Rasierapparates gemäß der Erfindung sieht vor, daß ein Motor von etwa 9 W für 6 V, fünf Speichertrockenbatterien von je 1,2 V und 0,5 Ah und fünfzehn in Reihe geschaltete plattenförmige Solarzellen einer Fläche von je 15 mm x 20 mm und je 0,5 V und 0,05 A vorgesehen sind. Bei einer Rasierdauer von zum Beispiel 1,5 min./Tag wird eine Kapazität von 0,0375 Ah benötigt.

Es wurde ermittelt, daß bei bedecktem Himmel oder durch Einwirken künstlichen Lichts die Solarzellen im Durchschnitt 2,5 % ihrer Nennampere je Stunde an die Speichertrockenbatterie abgeben; dies ergibt z.B. bei 14 h/Tag eine zugeführte Kapazität von 0,0175 Ah. Damit ist die tatsächliche Entnahme 0,02 Ah/24 Stunden.

Bei den gewählten Speichertrockenbatterien mit z.B. 0,5 Ah können nach einer vollständigen Aufladung bei einer Dauer der Rasur von 1,5 min./Tag etwa 25 Rasuren mit dem Rasierapparat bis zur nächsten Aufladung durchgeführt werden. Die 100%ige Aufladung erfolgt bei einer

- 4 -

- 4 -

Sonnenscheindauer von 10 Stunden in 25 Tagen bei einer Intensität von z.B. 1 000 W/m$^2$ = 0,05 A/Stunde. Abgabe an die Speichertrockenbatterien.

Die Lebensdauer des Rasierapparates gemäß der Erfindung richtet sich insbesondere nach der Lebensdauer der Speichertrockenbatterien, vorausgesetzt, daß keine mechanische Beschädigung stattfindet. Speichertrockenbatterien handelsüblicher Art können heute bei Entladungen bis kurz vor Tiefentladung bis zu 1 000mal aufgeladen werden und bei Teilentladung bis zu 10 000mal. Bei einem Einsatz gemäß der Erfindung ist davon auszugehen, daß bei Normalbetrieb eine Teilentladung erfolgt. Somit kann angenommen werden, daß die Speichertrockenbatterien bis zu 10 000mal wieder teilaufgeladen werden können, was einer Lebensdauer bei Anwendung gemäß Rasierapparat mit Solarzellen nach der Erfindung, vorausgesetzt, daß die Mechanik nicht versagt, von 10 000 x 365 Tagen, also über 25 Jahren entspricht.

Eine weitere mögliche Variante des erfindungsgemäßen Rasierapparates - als rechnerisches Beispiel ausgeführt - ist ausgerüstet mit einem Motor von 6 W für 3,6 V, drei Speichertrockenbatterien von je 1,2 V und 0,5 Ah und neun in Reihe geschalteten plattenförmigen Solarzellen einer Fläche von je 15 mm x 20 mm und 0,5 V und 0,05 A. Ein solcher kleinerer Rasierapparat kann beispielsweise als Damenrasierapparat Verwendung finden.

Darüber hinaus ist es natürlich möglich, auch Solarzellen in plattenförmiger Ausführung anderer Abmessungen und mit anderen Volt- und Ampere-Abgaben, Speichertrockenbatterien mit anderen Voltzahlen und Kapazitäten und Elektromotoren anderer Voltzahlen und Leistungen einzusetzen.

Die benötigte Anzahl der Solarzellen wird vorteilhaft so berechnet, daß während einer realistischen Aufladungszeit während einer Tagesperiode die Betriebsdauer mit Sicherheit gewährleistet wird für einen Dauerbetrieb, wobei die Nennvoltabgabe um mindestens 25% höher sein sollte als die Voltzahl der einzelnen oder in Reihe geschalteten Speichertrockenbatterien.

Die Erfindung wird in der Zeichnung anhand von Ausführungsbeispielen näher erläutert. Es zeigen

die Figur 1 eine Unteransicht auf einen Rasierapparat,

die Figur 2 eine Aufsicht ohne Schutzplatte auf den Rasierapparat mit Solarzellen,

die Figuren 3 und 4 eine Aufsicht und eine Seitenansicht der Schutzplatte,

die Figuren 5 und 6 die Unteransicht und Aufsicht auf einen weiteren erfindungsgemäß ausgerüsteten Rasierapparat und

die Figuren 7 und 8 ebenfalls die Unteransicht und Aufsicht auf eine weitere Variante des Rasierapparates.

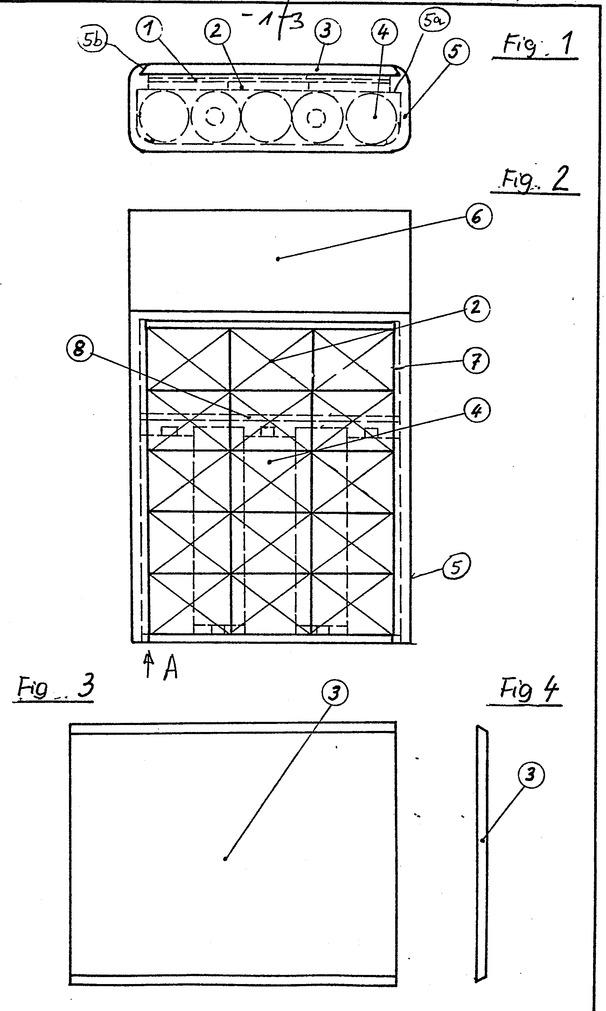

In der Aufsicht der Figur 2 ist der erfindungsgemäße Rasierapparat in seinem prinzipiellen Aufbau erkennbar. In dem Gehäuse 5 ist am oberen Ende die Schermechanik 6, in bekannter Weise ausgebildet, untergebracht. Hieran schließt sich in dem Gehäuse 5 der Raum 7 für die Unterbringung des Schermotors an, beispielsweise einem Motor von 9 W für 6 V. Der Motorraum ist dann gegenüber dem Raum, in dem die Speichertrockenbatterien, beispielsweise NC-Akkus 4, von je 1,2 V und 0,5 Ah untergebracht sind, mittels der Zwischenplatte 8 abgeschottet.

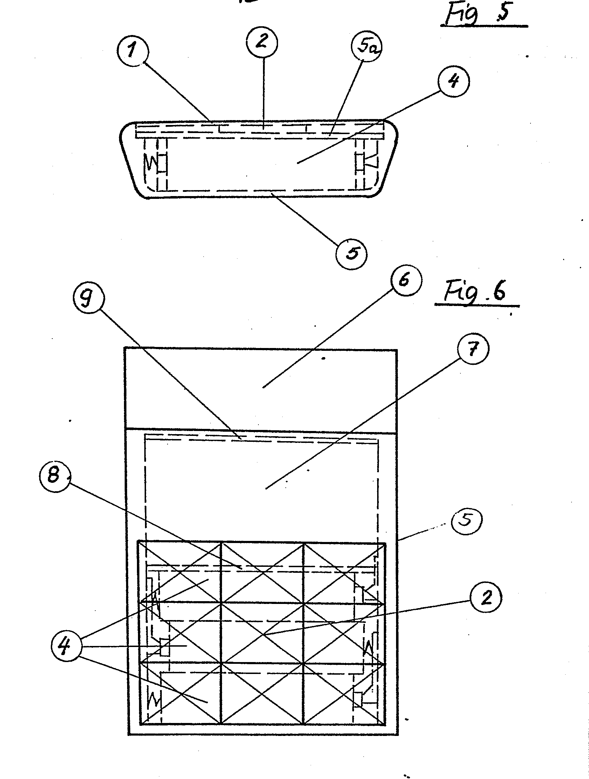

Auf einer Außenfläche des Gehäuses 5 im Bereich des Motors und der Trockenbatterien sind die Solarzellen 2 angeordnet. Dies geht auch aus der Ansicht A nach Figur 2, die in Figur 1 dargestellt ist, hervor. Die Solarzellen 2 sind vorzugsweise plattenförmig rechteckig ausgebildet und zu einer Solarplatte zusammengefaßt und beispielsweise auf der Gehäusefläche 5a aufgeklebt. Bevorzugt ist das Gehäuse 5 im Bereich der Anordnung der Solarzellen 2 nischenförmig eingezogen, so daß die Solarplatten 2 versenkt gegenüber der Gehäuseoberfläche angeordnet sind und auf diese Weise bereits etwas geschützt. Weiterhin ist vorgesehen, daß die Solarzellen mit einer durchsichtigen Kunststoffplatte, beispielsweise aus Acrylharz abgedeckt sind. In einer weiteren Ausbildung ist vorgesehen, daß die so angeordneten Solarzellen noch zusätzlich mit der Schutzplatte 3 abgedeckt sind. Die Schutzplatte 3 ist in Aufsicht und Seitenansicht in den Figuren 3 und 4 dargestellt, sie weist an den seitlichen Rändern eine Anphasung auf, mit der sie in der Hinterschleidung 5b des Gehäuses 5 geführt ist. Die Schutzplatte ist bevorzugt nach einer Seite ausziehbar. Die Schutzplatte 3 ist bevorzugt undurchsichtig. Sie dient zugleich zum Einschalten und Ausschalten der Aufladung der Trockenbatterien mittels der Solarzellen. Durch Herausziehen der Schutzplatte werden die Solarzellen 2 für die Energieaufnahme freigegeben. Zu diesem Zeitpunkt muß der Motor auf Null geschaltet sein, so daß der Ladevorgang beginnen kann. Bei Schalterstellung Eins des Motors, wenn dieser läuft, ist die Schaltung Solarzellen : Speichertrockenbatterien unterbrochen. Bei Wiederaufbringen der Schutzplatte ist die Energieaufnahme und damit die Aufladung der Speichertrockenbatterien beendet.

In dem gezeigten Beispiel nach Figur 2 sind fünfzehn Solarzellen mit je 15 mm x 20 mm Fläche und 0,5 V, 0,05 A vorgesehen, die in Reihe zu einem Solargenerator von 7,5 V und 0,05 A geschaltet sind. Die Verbindung zwischen diesem Solargenerator und den Speichertrockenbatterien 4 wird durch eine bekannte Verdrahtung hergestellt, in die eine Sperrdiode integriert ist, die den Volt-Ampere-Rückfluß von Trockenbatterien : Solargenerator verhindert. Zum Schutz der Speichertrockenbatterien ist noch ein Tiefentlade- sowie ggf. ein Überladeschutz in der Verdrahtung vorzusehen. Vorteilhaft sind Speichertrockenbatterien mit Überladeschutz einzusetzen.

Die als Rechenbeispiel ausgewählten Solarzellen geben 7,5 V und bei einer 100%igen Sonneneinwirkung bei 1 000 W/m$^2$ entsprechend 100% Sonneneinwirkung 0,05 A ab. Bei einer täglichen Rasierdauer von z.B. 1,5 min. wird den Trockenbatterien etwa 0,0375 Ah entnommen. 0,0375 Ah entsprechen bei einer 100%igen Sonneneinwirkung einer Aufladezeit von 45 min.
Um die Speichertrockenbatterien durch die vorgesehenen Solarzellen von 0% auf 100% aufzuladen, bedarf es einer Aufnahme von 0,5 Ah, d.h. einer Aufladezeit von mindestens 10 Stunden bei einer 100%igen Solareinstrahlung. Bei konsequenter Ausnutzung der zur Verfügung stehenden Solarenergie ist es möglich, den erfindungsgemäßen Rasierapparat ständig, auch im Winter und bei trübem Wetter, einsatzbereit zu erhalten.

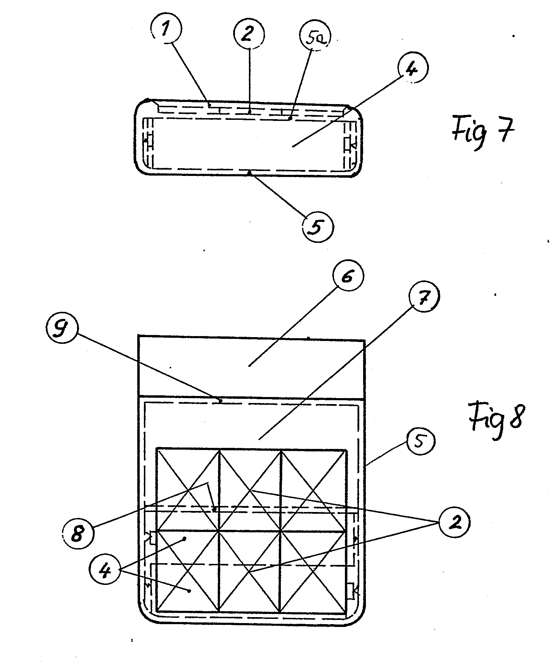

In den Figuren 5 und 6 ist eine weitere Variante eines erfindungsgemäßen kleineren Rasierapparates dargestellt. Bei diesem Beispiel sind die Solarzellen 2 als Platte in der Gehäusenische 5a aufgeklebt und oberseitig durchgehend mit der Gehäusebegrenzung mit der durchsichtigen Kunststoffplatte 1 abgedeckt. Aus der Aufsicht nach

Figur 6 ist zu ersehen, daß nur ein Teil der Gehäusefläche mit den Solarzellen 2 bestückt ist. Die hier gezeigte Ausführung enthält drei NC-Akkus mit je 1,2 V und 0,5 Ah, in dem Gehäuse 5 ist in dem Bereich 7 der nicht näher dargestellte Motor mit einer Leistung von 6 W bei 3,6 V vorgesehen. Zwischen Motorraum 7 und Schermechanik 6 ist die Trennplatte 9 eingesetzt. Der Solargenerator enthält in dem gezeigten Beispiel neun Solarzellen mit je 15 mm x 20 mm Fläche und je 0,5 V und 0,05 A. Bei einer Rasierdauer von 1,5 min./Tag wird den NC-Akkus eine Kapazität von 0,042 Ah entnommen. Bei einer Solareinstrahlung von 1 000 W/m$^2$, was einer 100%igen Solareinwirkung entsprechen soll, haben die Akkus bereits nach 50 Minuten wieder volle Kapazität. Es ist auch möglich, die Werte der Solarzellen, der NC-Akkus bzw. des Elektromotors zu variieren, beispielsweise ist es möglich, drei bzw. sechs Solarzellen mit 1,5 bzw. 3 V oder zwölf Solarzellen mit 6 V, jeweils in Reihe geschaltet vorzusehen.

In den Figuren 7 und 8 ist eine weitere erfindungsgemäße Ausstattung eines Rasierapparates dargestellt. In diesem gezeigten Beispiel sind gemäß Figur 8 nur zwei NC-Akkus mit je 1,2 V und 0,5 Ah in dem Gehäuse 5 vorgesehen. Getrennt hiervon durch die Trennplatte 8 ist der Motorraum 7 mit dem nicht dargestellten Motor, beispielsweise einem Motor von 4,8 W bei 2,4 V. Dieser Motorraum 7 ist wiederum durch die Trennplatte 9 von dem Scherkopf 6 getrennt. Hierbei kann es sich beispielsweise um einen weniger häufig und auch für nicht so lange Zeit benutzten Rasierapparat, beispielsweise einen Damenrasierapparat handeln. Die Solarzellen 2 sind so auf einer Gehäuseaußenfläche untergebracht, daß sie versenkt angeordnet sind und mittels der Kunststoffplatte, die durchsichtig ist, fluchtend mit der Gehäuseoberfläche abgedeckt sind. Auf diese Weise ergibt sich ein kompaktes und handliches Gerät, wobei auch eine Verschmutzung und Beschädigung der Solarzellen im Gebrauch ausgeschlossen sind.

Troisdorf, den 3.12.1982

1 Patentansprüche

1. Rasierapparat mit einem Gehäuse, einer mittels eines Motors angetriebenen Schermechanik und mindestens einer wiederaufladbaren Speichertrockenbatterie, die elektrisch mit dem Motor verbunden ist, dadurch gekennzeichnet, daß in Serie geschaltete und zu einer Platte verbundene Solarzellen (2) an einer Gehäusefläche (5 bzw. 5a) außenseitig bzw. innenseitig befestigt und mittels einer lichtdurchlässigen Kunststoffplatte (1) abgedeckt sind.

2. Rasierapparat nach Anspruch 1, dadurch gekennzeichnet, daß die Kunststoffplatte (1) integrierter Bestandteil des Gehäuses (5) ist.

3. Rasierapparat nach Anspruch 1 oder 2, dadurch gekennzeichnet, daß die Solarzellen (2) an der Gehäusefläche (5 bzw. 5a) festgeklebt sind.

4. Rasierapparat nach einem der Ansprüche 1 bis 3, dadurch gekennzeichnet, daß die Solarzellen (2) auf einer nischenförmig eingezogenen Gehäuseaußenfläche (5) befestigt sind.

5. Rasierapparat nach Anspruch 4, dadurch gekennzeichnet, daß eine beidseitig je längs eines Randes in dem Gehäuse in einer Hinterschneidung (5b) geführte und nach einer Seite ausschiebbare lichtundurchlässige Schutzkappe (3) über den Solarzellen (2) mit Kunststoffplatte (1) vorgesehen ist.

6. Rasierapparat nach einem der Ansprüche 1 bis 4, dadurch gekennzeichnet, daß eine lichtundurchlässige Schutzkappe (3) auf das Gehäuse (5) zum Abdecken der Solarzellen (2) aufgeklipst ist.

- 2 -

7. Rasierapparat nach einem der Ansprüche 1 bis 6, dadurch gekennzeichnet, daß ein Motor von etwa 9 W für 6 V, fünf Speichertrockenbatterien (4) von je 1,2 V und 0,5 Ah und fünfzehn in Reihe geschaltete plattenförmige Solarzellen (2) einer Fläche von je 15 mm x 20 mm und je 0,5 V und 0,05 A vorgesehen sind.

8. Rasierapparat nach einem der Ansprüche 1 bis 6, dadurch gekennzeichnet, daß ein Motor von 6 W für 3,6 V, drei Speichertrockenbatterien von je 1,2 V und 0,5 Ah und neun in Reihe geschaltete plattenförmige Solarzellen einer Fläche von je 15 mm x 20 mm und 0,5 V und 0,05 A vorgesehen sind.

-1/3

Fig. 1

Fig. 2

Fig. 3

↑ A

Fig 4

Fig 5

Fig.6

Fig 7

Fig 8

0116143

Europäisches
Patentamt

**EUROPÄISCHER RECHERCHENBERICHT**

Nummer der Anmeldung

EP 83112254.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | <u>AT - B - 248 913</u> (INTERELECTRIC SACHSELN AG) <br> * Seite 2, Zeilen 12-17 * <br> -- | 1 | B 26 B 19/28 |
| Y | <u>US - A - 4 122 396</u> (GRAZIER) <br> * Seite 1, Zusammenfassung, Spalte 3, Zeilen 14-19 * <br> ---- | 1 | |

| RECHERCHIERTE SACHGEBIETE (Int. Cl. ³) |
|---|
| B 26 B 19/20 |
| B 26 B 19/30 |
| H 01 L 31/00 |

Der vorliegende Recherchenbericht wurde für alle Patentansprüche erstellt.

| Recherchenort | Abschlußdatum der Recherche | Prüfer |
|---|---|---|
| WIEN | 17-02-1984 | MANLIK |